# EUROPÄISCHE PATENTSCHRIFT

(11) **EP 2 594 461 B1**
(45) Veröffentlichungstag und Bekanntmachung des Hinweises auf die Patenterteilung: **29.04.2015**
(21) Anmeldenummer: 12191987.2
(22) Anmeldetag: 09.11.2012
(51) Int. Cl.: B62D 15/02, G05D 1/02, G08G 1/16

(54) **Verfahren zum Erkennen einer Parklücke für ein Kraftfahrzeug, Parkhilfesystem und Kraftfahrzeug mit einem Parkhilfesystem**
Method for detecting a parking space for a motor vehicle, parking assistance system and motor vehicle with a parking assistance system
Procédé de détection d'une place de stationnement pour un véhicule automobile, système d'aide au stationnement et véhicule automobile équipé d'un système d'aide au stationnement

(30) Priorität: 16.11.2011 DE 102011118726
(43) Veröffentlichungstag der Anmeldung: 22.05.2013
(73) Patentinhaber: Valeo Schalter und Sensoren GmbH, 74321 Bietigheim-Bissingen (DE)
(72) Erfinder: Heimberger, Markus, 74354 Besigheim (DE); Lägler, Andreas, 74389 Cleebronn (DE)

(56) Entgegenhaltungen:
- DE-A1-102004 047 507
- DE-A1-102005 029 335
- DE-A1-102007 055 390
- DE-A1-102009 001 316
- DE-A1-102009 024 083
- DE-U1-202008 015 837

## Beschreibung

Die Erfindung betrifft ein Verfahren zum Erkennen einer Parklücke für ein Kraftfahrzeug mithilfe eines Parkhilfesystems des Kraftfahrzeugs. Das Parkhilfesystem ermittelt einen geometrischen Parameter der Parklücke anhand von Sensordaten einer Sensoreinrichtung des Parkhilfesystems, nämlich insbesondere anhand von Sensordaten zumindest eines Ultraschallsensors. Es werden außerdem weitere, von den Sensordaten unterschiedliche - insbesondere nicht auf die Parklücke selbst bezogene - Umgebungsinformationen des Kraftfahrzeugs mittels des Parkhilfesystems erfasst, und das Parkhilfesystem erkennt die Parklücke anhand des geometrischen Parameters der Parklücke sowie unter Berücksichtigung der weiteren Umgebungsinformationen des Kraftfahrzeugs. Die Erfindung betrifft außerdem ein Parkhilfesystem zum Durchführen des erfindungsgemäßen Verfahrens, wie auch ein Kraftfahrzeug mit einem derartigen Parkhilfesystem.

Parkhilfesysteme für Kraftfahrzeuge sind bereits Stand der Technik. Sie dienen zum Unterstützen des Fahrers beim Einparken des Kraftfahrzeugs in eine Parklücke, sei es eine Queparklücke oder aber eine Längsparklücke. Solche Parkhilfesysteme beinhalten in der Regel Ultraschallsensoren, welche während einer Vorbeifahrt des Kraftfahrzeugs an einer potentiellen Parklücke Sensordaten bereitstellen, anhand welcher erkannt werden kann, ob die potentielle Parklücke für den Parkvorgang geeignet ist oder nicht - es wird also die Parklücke anhand der Sensordaten erkannt. Dabei wird insbesondere die Abmessung der Parklücke in Längsrichtung der Straße ermittelt, wie auch die Tiefe der Parklücke. Wird eine potentielle Parklücke als eine für den Parkvörgang geeignete Parklücke interpretiert, so wird dies dem Fahrer angezeigt, und der Fahrer kann entscheiden, ob der Parkvorgang durchgeführt werden soll oder nicht. Hier gibt es unterschiedliche Möglichkeiten: Es existieren so genannte vollautomatische Parkhilfesysteme, wie auch halbautomatische bzw. semi-autonome Parkhilfesysteme. Bei vollautomatischen Parkhilfesystemen braucht der Fahrer den Parkvorgang lediglich freizugeben; das Parkhilfesystem übernimmt dabei die Lenkung und gegebenenfalls sogar auch die Beschleunigung und das Abbremsen. Bei halbautomatischen Systemen hingegen wird dem Fahrer angezeigt, in weiche Richtung er lenken soll, damit das Kraftfahrzeug in die Parklücke eingeparkt wird.

Problematisch können solche Situationen sein, bei welchen das Kraftfahrzeug teilweise oder vollständig auf einem Gehweg eingeparkt werden kann. Solche Parksituationen können nicht ohne weiteres anhand von Sensordaten eines Ultraschallsensors erkannt werden. Dies gilt insbesondere dann, wenn sich die potentielle Parklücke zwischen zwei anderen Kraftfahrzeugen befindet, von denen eines auf der Straße und das andere zur Hälfte öder vollständig auf dem Gehweg geparkt ist. Selbiges Problem ergibt sich auch dann, wenn das eine Kraftfahrzeug teilweise auf dem Gehweg und das andere vollständig auf dem Gehweg geparkt ist, oder aber eine potentielle Parklücke gegeben ist, welche nur durch ein einziges Kraftfahrzeug begrenzt ist. Bei derartigen Situationen kann das Parkhilfesystem nicht genau einschätzen, wie tief die potentielle Parklücke tatsächlich ist, sodass das Parkhilfesystem die Endposition des Kraftfahrzeugs in der Parklücke nicht oder nur mit einem großen Messaufwand bestimmen kann.

Die Druckschrift DE 10 2004 047 507 A1 beschreibt ein Verfahren sowie ein Parkhilfesystem zur Erkennung einer freien Parklücke für ein Kraftfahrzeug. Es werden zunächst geometrische Parameter der Parklücke bestimmt, und es wird entschieden, ob die Parklücke eine ausreichende Größe für das Kraftfahrzeug aufweist und somit für den Parkvorgang geeignet ist oder nicht. Des Weiteren werden auch Karteninformationen eines Navigationssystems des Kraftfahrzeugs oder aber Kamerabilder berücksichtigt, sodass weitere, nicht auf die Parklücke bezogene Umgebungsinformationen - etwa ein Parkverbot - erfasst werden. Die Kenntnis dieser Informationen wird dazu verwendet, eine zunächst als geeignet erkannte Parklücke auszuschließen und die Anzeige einer zunächst als geeignet angesehenen Parklücke für den Fahrer zu unterdrücken.

Es ist Aufgabe der Erfindung, eine Lösung aufzuzeigen, wie bei einem Verfahren der eingangs genannten Gattung eine geeignete Parklücke auch dann erkannt werden kann, wenn das Kraftfahrzeug zumindest teilweise auf einem Bordstein bzw. einem Gehweg geparkt werden kann.

Diese Aufgabe wird erfindungsgemäß durch ein Verfahren, ein Parkhilfesystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird eine Parklücke für ein Kraftfahrzeug mithilfe eines Parkhilfesystems des Kraftfahrzeugs erkannt. Das Parkhilfesystem ermittelt einen geometrischen Parameter der Parklücke anhand von Sensordaten einer Sensoreinrichtung des Parkhilfesystems, nämlich beispielsweise anhand von Sensordaten zumindest eines Ultraschallsensors, Es werden auch weitere, von den Sensordaten unterschiedliche - insbesondere von der Parklücke unabhängige bzw. nicht auf die Parklücke selbst bezogene - Umgebungsinformationen des Kraftfahrzeugs mittels des Parkhilfesystems erfasst. Diese weiteren Umgebungsinformationen werden bei der Erkennung der Parklücke dahingehend berücksichtigt, dass der geometrische Parameter der Parklücke - nämlich insbesondere die Tiefe der Parklücke und/oder die relative Position der Parklücke des Kraftfahrzeugs - auch in Abhängigkeit von den weiteren Umgebungsinformationen des Kraftfahrzeugs bestimmt wird.

Anders als im Gegenstand gemäß Druckschrift DE 10 2004 047 507 A1 - dort werden die weiteren Umgebungsinformationen lediglich dazu verwendet, die Anzeige einer geeigneten Parklücke gegebenenfalls zu unterdrücken - werden die weiteren Umgebungsinformationen erfindungsgemäß auch bei der Ermittlung des geometrischen Parameters der Parklücke berücksichtigt, nämlich insbesondere bei der Bestimmung der Tiefe der Parklücke und/oder der relativen Position der Parklücke (insbesondere in Querrichtung der Straße) bezüglich des Kraftfahrzeugs. Auf diesem Wege gelingt es, den geometrischen Parameter der Parklücke mit höchster Genauigkeit auch dann zu bestimmen, wenn das Kraftfahrzeug zumindest teilweise auf einem Bordstein bzw. einem Gehweg geparkt werden darf und die potentielle Parklücke durch zwei andere Kraftfahrzeuge begrenzt ist, die in Querrichtung der Straße unterschiedlich geparkt sind, oder aber die Parklücke lediglich durch ein einziges Kraftfahrzeug begrenzt ist. Wird beispielsweise als weitere Umgebungsinformation erfasst, dass das Kraftfahrzeug teilweise oder vollständig auf dem Gehweg geparkt werden darf, so kann beispielsweise der die-Straße begrenzende Bordstein durch das Parkhilfesystem bei der Bestimmung des geometrischen Parameters der Parklücke ignoriert werden, und das Parkhilfesystem kann beispielsweise nach einem weiteren Bordstein suchen, der sich weiter weg vom Kraftfahrzeug befindet. Dieser zweite Bordstein kann dann zur Bestimmung des geometrischen Parameters der Parklücke - insbesondere der Tiefe - herangezogen werden. Somit wird verhindert, dass der erste Bordstein (auf welchem geparkt werden darf) durch das Parkhilfesystem als ein Hindernis interpretiert wird und das Kraftfahrzeug vor dem Bordstein geparkt wird. Dieser erste Bordstein kann durch das Kraftfahrzeug überfahren werden, sodass das Kraftfahrzeug ordnungsgemäß eingeparkt werden kann.

Als geometrischer Parameter, der anhand der Sensordaten der Sensoreinrichtung sowie in Abhängigkeit von den weiteren Umgebungsinformationen des Kraftfahrzeugs bestimmt wird, wird bevorzugt eine Tiefe der Parklücke in Querrichtung der Fahrbahn und/oder eine relative Position der Parklücke bezüglich des Kraftfahrzeugs bestimmt. In Abhängigkeit von den weiteren Umgebungsinformationen kann also insgesamt die zur Verfügung stehende Breite der Parklücke und somit die genaue Position der Parklücke relativ zum Kraftfahrzeug bestimmt werden. Hierdurch wird erreicht, dass eine plausible Parkbahn durch das Parkhilfesystem berechnet werden kann, entlang welcher das Kraftfahrzeug in die Parklücke geführt werden kann. Es wird außerdem erreicht, dass das Kraftfahrzeug ordnungsgemäß in Querrichtung der Straße, und nicht etwa zu nahe an der Straße eingeparkt wird. Die zur Verfügung stehende Tiefe der Parklücke kann somit wirkungsvoll genutzt werden.

Für die Erfassung der weiteren Umgebungsinformationen sind vorliegend zwei Ausführungsformen vorgesehen: Zum einen können die weiteren Umgebungsinformationen anhand eines Bildes erfasst werden, welches mittels einer Kamera des Parkhilfesystems aufgenommen wird. Eine solche Kamera kann die Umgebung des Kraftfahrzeugs fortlaufend erfassen, sodass die jeweiligen Umgebungsinformationen situationsabhängig und bedarfsgerecht erfasst werden können. Ergänzend oder alternativ können die weiteren Umgebungsinformationen auch anhand von Kartendaten eines Navigationssystems des Kraftfahrzeugs sowie unter Berücksichtigung der aktuellen geographischen bzw. globalen Position des Kraftfahrzeugs gewonnen werden. Diese Ausführungsform hat den Vorteil, dass in soichen Kartendaten auch derartige Umgebungsinformationen enthalten sein können, die anhand eines Kamerabildes nicht erfasst werden können. Ein weiterer Vorteil besteht darin, dass ein in der Regel ohnehin vorhandenes Navigationssystem verwendet werden kann und gegebenenfalls auf eine Kamera verzichtet werden kann. Sowohl mithilfe einer Kamera als auch mittels eines Navigationssystems können zahlreiche Umgebungsinformationen erfasst werden, nämlich beispielsweise ein Parkverbot, die Möglichkeit des Parkens auf einem Gehweg und dergleichen.

Besonders bevorzugt ist es, wenn in dem aufgenommenen Bild ein Verkehrszeichen identifiziert wird. Dann können die weiteren Umgebungsinformationen aus dem Abbild des Verkehrszeichens in dem aufgenommenen Bild gewonnen werden. Somit können unterschiedlichste Umgebungsinformationen durch das Parkhilfesystem erfasst werden, denn das Parkhilfesystem kann die aufgenommenen Bilder einer Mustererkennung hinsichtlich einer Vielzahl von möglichen relevanten Verkehrszeichen unterziehen. In dem aufgenommenen Bild kann beispielsweise das Verkehrszeichen detektiert werden, dass das Kraftfahrzeug teilweise oder vollständig auf einem Gehweg geparkt werden kann. Diese Art der Erfassung der Umgebungsinformationen ist auch besonders zuverlässig, es können nämlich auch ganz neue Verkehrszeichen erkannt werden, die beispielsweise erst seit einer kurzen Zeit vorhanden sind und somit noch nicht in den Kartendaten eines Navigationssystems abgespeichert sind.

Erfindungsgemäß wird die Zulässigkeit des teilweisen oder vollständigen Parkens auf einem Gehweg bzw. einem Bordstein als weitere Umgebungsinformation erfasst, sei es anhand von Kartendaten eines Navigationssystems, sei es anhand eines mittels einer Kamera aufgenommenen Bildes. Diese Umgebungsinformation ermöglicht die genaue Bestimmung der Tiefe der Parklücke, sodass auch eine entsprechende zuverlässige Parkbahn für den Parkvorgang durch das Parkhilfesystem berechnet werden kann. Ist das Parken auf einem Bordstein zulässig, so kann das Parkhilfesystem nämlich die genannte Parkbahn auch in der Weise berechnen, dass ein erkannter Bordstein - welcher in der Regel durch bekannte Parkhilfesysteme als ein Hindernis und somit als eine Begrenzung der Parklücke interpretiert wird - durch das Kraftfahrzeug auch überfahren wird und bei der Berechnung der Tiefe der Parklücke nicht berücksichtigt wird. Somit ist ein zuverlässiges Parken möglich.

Es existieren auch Parkbuchten, die sich entlang einer Straße erstrecken und durch zwei Bordsteine seitlich begrenzt sind: Der erste Bordstein trennt die Parkbucht von der tatsächlichen Straße und der zweite Bordstein begrenzt die Parkbucht von dem tatsächlichen Gehweg. Eine derartige Parkbucht fällt vorliegend unter den allgemeinen Begriff "Gehweg", sodass der Begriff "Gehweg" vorliegend auch solche Parkeinbuchtungen beinhaltet, die mittels eines Bordsteins von der Straße getrennt sind.

In einer Ausführungsform wird in Abhängigkeit von der Information über die Zulässigkeit des Parkens auf dem Gehweg eine Annahme bezüglich der Position eines die Parklücke begrenzenden Bordsteins getroffen. Hier wird also der seitliche Abstand bestimmt, in welchem der Bordstein erwartet wird. Wird die Information über die Zulässigkeit des Parkens auf dem Gehweg - nämlich in einer durch zwei Bordsteine begrenzten Parkbucht - durch das Parkhilfesystem erfasst, so kann das Parkhilfesystem den ersten Bordstein bei der Bestimmung der Tiefe der Parklücke ignorieren und nach einem zweiten Bordstein suchen. Somit kann der zweite Bordstein aufgefunden und die Tiefe der Parklücke korrekt bestimmt werden.

Erfindungsgemäß ist vorgesehen, dass - falls anhand der weiteren Umgebungsinformationen erkannt wird, dass das Kraftfahrzeug zumindest teilweise auf dem Gehweg geparkt werden darf - ein in Richtung seitlich vom Kraftfahrzeug weg befindlicher erster Bordstein durch das Parkhilfesystem bei der Bestimmung des geometrischen Parameters der Parklücke ignoriert wird, in einer Ausführungsform bei der Bestimmung der Tiefe. Es wird somit ermöglicht, dass der erste Bordstein durch das Kraftfahrzeug überfahren wird und das Kraftfahrzeug somit ordnungsgemäß auf dem Gehweg geparkt werden kann.

Wird anhand der weiteren Umgebungsinformationen erkannt, dass das Kraftfahrzeug zumindest teilweise auf dem Gehweg geparkt werden darf, so wird bevorzugt ein in Richtung seitlich vom Kraftfahrzeug weg befindlicher zweiter Bordstein erfasst und bei der Bestimmung des geometrischen Parameters, insbesondere der Tiefe, berücksichtigt. Das Ignorieren des ersten Bordsteins und die Berücksichtigung des zweiten Bordsteins kann grundsätzlich auf zwei unterschiedliche Art und Weisen erfolgen: Zum einen kann die Messung mithilfe der Sensoreinrichtung bereits vorab beeinflusst werden, nämlich dann, wenn die Zulässigkeit des Parkens auf dem Gehweg erkannt wird. Hier kann die Sensoreinrichtung - nämlich insbesondere zumindest ein Ultraschallsensor - in der Weise angesteuert werden, dass ausschließlich der Abstand zum zweiten Bordstein gemessen wird. Dabei kann beispielsweise eine Abtastfrequenz und/oder die Reichweite der Sensoreinrichtung verändert werden. Zum anderen kann auch vorgesehen sein, dass nach der Messung die durch die Sensoreinrichtung bereitgestellten Sensordaten in der Weise verarbeitet werden, dass der erste Bordstein "herausgefiltert" wird und lediglich der zweite Bordstein, der sich weiter weg vom Kraftfahrzeug befindet, bei der Bestimmung der Tiefe der Parklücke berücksichtigt wird. Beide Ausführungsformen führen dazu, dass der erste Bordstein durch das Kraftfahrzeug überfahren werden kann, während der zweite Bordstein eine tatsächliche Begrenzung der Parklücke in Querrichtung der Straße nach außen hin darstellt.

Anhand der weiteren Umgebungsinformationen kann in einer Ausführungsform auch festgestellt werden, ob das Parken in einer anhand der Sensordaten erkannten potentiellen Parklücke zulässig ist oder nicht. Nach Feststellen eines Parkverbots kann dann ein Informationssignal durch das Parkhilfesystem ausgegeben werden, durch welches der Fahrer über das Parkverbot informiert wird. Somit kann der Fahrer darüber informiert werden, ob das Einparken überhaupt zulässig ist oder nicht. Er kann dann selbst entscheiden, ob er den Parkvorgang tatsächlich durchführen will oder nicht. Dazu kann der Fahrer eine entsprechende Eingabe an einer Eingabeeinrichtung des Parkhilfesystems vornehmen, über welche festgelegt wird, ob das Parkhilfesystem einen Parkvorgang durchführen soll, also insbesondere eine Parkbahn berechnen soll oder nicht.

Es kann auch vorgesehen sein, dass nach Feststellen des Parkverbots eine Parkalternative für das Einparken durch das Parkhilfesystem vorgeschlagen wird. Dies kann beispielsweise so aussehen, dass diese Parkalternative anhand von Kartendaten des Navigationssystems sowie unter Berücksichtigung der aktuellen globalen Position des Kraftfahrzeugs erkannt und dem Fahrer vorgeschlagen wird. Dies ist besonders benutzerfreundlich, denn der Fahrer muss nicht alleine nach möglichen Parkalternativen suchen, sondern er wird über diese Parkalternativen mittels des Parkhilfesystems informiert.

Also kann das Parkhilfesystem ein Parkverbot erkennen, und zwar beispielsweise anhand von Kartendaten des Navigationssystems und/oder anhand eines Kamerabildes. Als Parkverbot können auch indirekte Verkehrszeichen gelten, die durch das Parkhilfesystem erkannt werden. Als derartiges Verkehrszeichen kann zum Beispiel das Zeichen einer Bushaltestelle, ein Stopp-Zeichen, ein Bahnübergang und dergleichen gelten. Das Parkhilfesystem erkennt dann beispielsweise, dass das Einparken in einem Abstand von 15m von einer Bushaltestelle nicht erlaubt ist. Ein solches Parkverbot kann auch anhand von Kartendaten des Navigationssystems erkannt werden. Will der Fahrer beispielsweise an einem Kreuzungsbereich oder aber zu nahe an einem Zebrastreifen einparken, kann er durch das Parkhilfesystem gewarnt werden. Selbiges gilt, wenn der Fahrer beispielsweise außerorts auf der Fahrbahn einparken möchte.

Entsprechend den Länderinformationen aus dem Navigationssystem kann die Vorgabe für das automatische Parken verändert werden, zum Beispiel für Länder, in denen das Parken auf Gehwegen generell erlaubt ist. So kann das Parkhilfesystem automatisch zwischen unterschiedlichen länderspezifischen Gesetzen bezüglich des Parkens umschalten. Entsprechend der Länderinformation aus dem Navigationssystem kann auch das Piktogramm bzw. das Muster unterschiedlicher Verkehrszeichen verändert werden, welche durch das Parkhilfesystem anhand von Kamerabildern erkannt werden sollen.

In einer Ausführungsform ist vorgesehen, dass das Parkhilfesystem als weitere Umgebungsinformation erkennt, dass in der erkannten Parklücke eine Parkscheibe notwendig ist. Das Parkhilfesystem kann dann den Fahrer entsprechend auf diesen Umstand hinweisen, sodass der Fahrer durch das Parkhilfesystem darüber informiert wird, dass eine Parkscheibe erforderlich ist.

Um zu vermeiden, dass der seitliche Abstand des Kraftfahrzeugs zu einer Fahrstreifenbegrenzung oder einer baulichen Fahrspurtrennung (Bordstein) in der Endposition in der Parklücke zu klein wird, kann anhand eines aufgenommenen Bildes diese Fahrstreifenbegrenzung oder die bauliche Fahrspurtrennung erkannt werden. Wird durch das Parkhilfesystem erkannt, dass der Abstand des geparkten Kraftfahrzeugs zu der genannten Begrenzung kleiner als ein vorgegebener Grenzwert ist, kann ein Warnsignal ausgegeben werden, mittels welchem der Fahrer über diesen zu kleinen Abstand informiert wird. Alternativ kann der Vorschlag bzw. die Anzeige dieser Parklücke für den Parkvorgang durch das Parkhilfesystem unterdrückt werden.

Ein erfindungsgemäßes Parkhilfesystem ist zum Durchführen eines erfindungsgemäßen Verfahrens ausgebildet.

Ein erfindungsgemäßes Kraftfahrzeug weist ein erfindungsgemäßes Parkhilfesystem auf.

Die mit Bezug auf das erfindungsgemäße Verfahren vorgestellten bevorzugten Ausführungsformen und deren Vorteile gelten entsprechend für das erfindungsgemäße Parkhilfesystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsformen, wie auch unter Bezugnahme auf die beigefügten Zeichnungen näher erläutert.

Es zeigen:
- Fig. 1: in schematischer Darstellung ein Kraftfahrzeug mit einem Parkhilfesystem gemäß einer Ausführungsform der Erfindung;
- Fig. 2: in schematischer Darstellung eine Parksituation, in welcher das Kraftfahrzeug auf einem Gehweg eingeparkt werden kann;
- Fig. 3 bis 9: in schematischer Darstellung jeweils ein Verkehrszeichen, welches durch das Parkhilfesystem anhand von Bildern einer Kamera identifiziert wird; und
- Fig. 10: einen zeitlichen Verlauf von Empfangssignalen eines Ultraschallsensors beim Vermessen einer Parklücke während der Vorbeifahrt des Kraftfahrzeugs an der Parklücke.

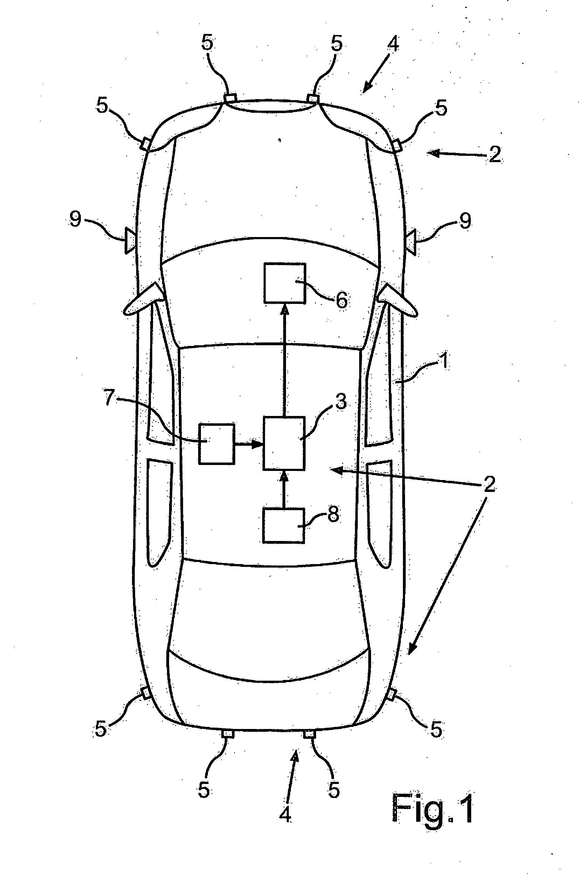

Ein in Fig. 1 in schematischer Darstellung gezeigtes Kraftfahrzeug 1 ist ein Personenkraftwagen. Das Kraftfahrzeug 1 beinhaltet ein Parkhilfesystem 2, welches zum Unterstützen des Fahrers beim Einparken in eine Parklücke ausgebildet ist. Das Parkhilfesystem 2 umfasst eine Steuereinrichtung 3 sowie eine Sensoreinrichtung 4, welche eine Vielzahl von Ultraschallsensoren 5 aufweist. Dabei sind eine Vielzahl von Ultraschallsensoren 5 an dem vorderen Stoßfänger des Kraftfahrzeugs 1 verteilt angeordnet, und eine Vielzahl von Ultraschallsensoren 5 sind am hinteren Stoßfänger angebracht. Dabei ist jeweils zumindest ein Ultraschallsensor 5 derart an der linken und der rechten Seitenflanke angeordnet, dass die seitlichen Bereiche neben dem Kraftfahrzeug 1 erfasst werden können.

Die Sensoreinrichtung 4 stellt Sensordaten bereit und übermittelt diese Sensordaten an die Steuereinrichtung 3. Die Steuereinrichtung 3 kann anhand der Sensordaten jeweilige Abstände zwischen dem Kraftfahrzeug 1 und fahrzeugexternen Hindernissen bestimmen.

Wie bereits ausgeführt, dient das Parkhilfesystem 2 zum Unterstützen des Fahrers beim Einparken in eine Parklücke. Dies beinhaltet zunächst die Erkennung einer geeigneten Parklücke. Eine solche wird während einer Vorbeifahrt des Kraftfahrzeugs 1 an der Parklücke erfasst. Während der Vorbeifahrt erfassen die Ultraschallsensoren 5 (nämlich die seitlichen Ultraschallsensoren 5) den seitlichen Bereich neben dem Kraftfahrzeug 1. Anhand der so erfassten Sensordaten ermittelt die Steuereinrichtung 3 die Abmessungen der Parklücke sowohl in Längsrichtung als auch in Querrichtung der Straße. Die Steuereinrichtung 3 bestimmt auch die relative Position der Parklücke bezüglich des Kraftfahrzeugs 1 und berechnet dann eine geeignete Parkbahn, entlang welcher das Kraftfahrzeug 1 in die Parklücke eingeparkt werden kann. Diese Parklücke kann dann dem Fahrer angezeigt werden, etwa mithilfe einer Ausgabeeinrichtung 6, die einen Lautsprecher und/oder ein Display umfassen,kann.

Das Parkhilfesystem 2 kann auch einen GPS-Empfänger 7 umfassen, welcher Positionssignale an die Steuereinrichtung 3 abgibt. Diese Positionssignale beinhalten Informationen über die jeweils augenblickliche globale bzw. geographische Position des Kraftfahrzeugs 1. In einem Speicher 8 sind Kartendaten abgelegt, welche eine Vielzahl von Karten unterschiedlicher Regionen sowie auch weitere Umgebungsinformationen beinhalten, wie insbesondere Parkmöglichkeiten, Parkverbote und dergleichen.

Zum Parkhilfesystem 2 gehören auch Kameras 9, die an dem Kraftfahrzeug 1 verteilt angeordnet sind. Die Kameras 9 sind optische Sensoren, welche Licht im sichtbaren Spektralbereich detektieren und so Bilder aufnehmen können.

Die Anzahl und die Anordnung der Ultraschallsensoren 5 sowie der Kameras 9 sind im Ausführungsbeispiel gemäß Fig. 1 lediglich beispielhaft und können je nach Ausführungsform variieren.

Die von den Kameras 9 erfassten Bilddaten werden an die Steuereinrichtung 3 übermittelt und können durch die Steuereinrichtung 3 verarbeitet werden. Die Steuereinrichtung 3 kann die aufgenommenen Bilder einer Mustererkennung hinsichtlich einer Vielzahl vorbestimmter Muster unterziehen und auf diese Art und Weise vorbestimmte Verkehrszeichen identifizieren. Anhand der Bilder kann die Steuereinrichtung 3 also weitere Umgebungsinformationen erfassen, die unabhängig von den Sensordaten der Ultraschallsensoren 5 sind.

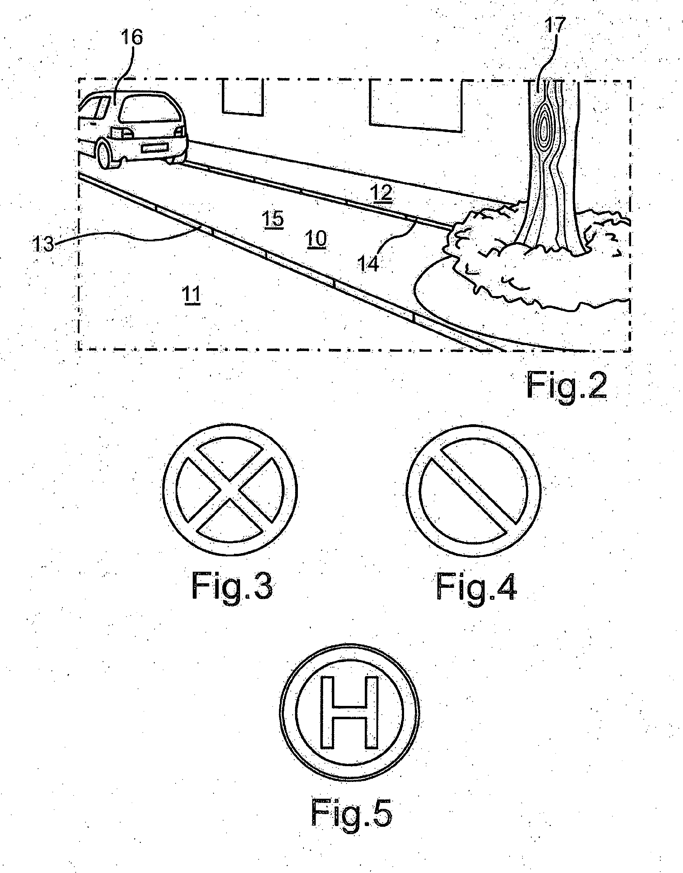

Vorliegend richtet sich das Interesse auf das Einparken des Kraftfahrzeugs 1 auf einem Gehweg, wie er in schematischer Darstellung in Fig. 2 dargestellt und mit 10 bezeichnet ist. Dieser Gehweg 10 stellt eine Parkbucht dar, die sich zwischen einer Straße 11 (Fahrbahn) einerseits und dem tatsächlichen Gehweg 12 andererseits befindet. Zwischen dem Gehweg 10 einerseits und der Straße 11 andererseits befindet sich ein erster Bordstein 13; zwischen dem Gehweg bzw. der Parkbucht einerseits und dem tatsächlichen Fußgängerweg 12 andererseits befindet sich ein zweiter Bordstein 14, der in Querrichtung der Straße 11 weiter weg als der erste Bordstein 13 angeordnet ist. Eine Parklücke 15 befindet sich auf dem Gehweg 10, und zwar zwischen einem die Parklücke begrenzenden Fahrzeug 16 einerseits und einem die Parklücke 15 ebenfalls begrenzenden Baum 17 andererseits. Also ist die Parklücke 15 in Längsrichtung der Straße 11 einerseits durch das Kraftfahrzeug 16 und andererseits durch den Baum 17 unmittelbar begrenzt. In Querrichtung der Straße 11 hingegen ist die Parklücke 15 einerseits durch den ersten Bordstein 13 und andererseits durch den zweiten Bordstein 14 begrenzt. Es handelt sich also um eine Längsparklücke 15, die sich parallel zur Straße 11 bzw. entlang der Längsrichtung der Straße 11 erstreckt.

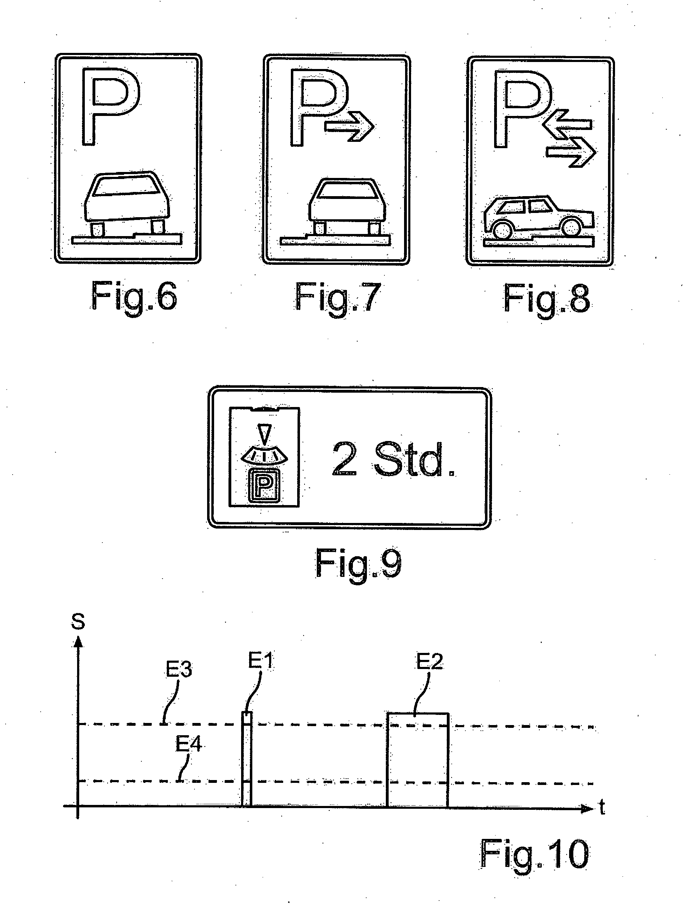

Die Parklücke 15 wird zunächst mittels der Ultraschallsensoren 5 während einer Vorbeifahrt des Kraftfahrzeugs 1 an der Parklücke 15 erfasst. Bei dem Ausführungsbeispiel gemäß Fig. 2 entsteht dabei ein zeitlicher Verlauf von Echos, wie er beispielsweise in Fig. 10 dargestellt ist. Auf der y-Achse ist ein Empfangssignal S der Sensoreinrichtung 4 (also die Echos) aufgetragen, und auf der x-Achse ist die Zeit t aufgetragen. Wie aus Fig. 10 hervorgeht, empfängt die Sensoreinrichtung 4 ein erstes Echo E1, welches dem Baum 17 entspricht, wie auch ein zweites Echo E2, welches dem Fahrzeug 16 entspricht. Ein drittes Echo E3 stellt den ersten Bordstein 13 dar. Schließlich ist ein viertes Echo E4 dem zweiten Bordstein 14 in Fig. 2 zugeordnet.

Mit weiterem Bezug auf Fig. 10 wird bei den aus dem Stand der Technik bekannten Parkhilfesystemen der zweite Bordstein 14 bzw. das Echo E4 herausgefiltert, und lediglich das Echo E3 des ersten Bordsteins 13 wird berücksichtigt. Dies führt im Stand der Technik dazu, dass bei der Parksituation gemäß Fig. 2 das Kraftfahrzeug vor dem ersten Bordstein 13, also auf der Straße eingeparkt wird, oder aber überhaupt keine Parklücke erkannt wird. Der erste Bordstein 13 wird nämlich im Stand der Technik als ein Hindernis interpretiert, welches durch das Kraftfahrzeug nicht überfahren werden darf.

Hingegen erfasst die Steuereinrichtung 3 vorliegend die oben genannten weiteren Umgebungsinformationen des Kraftfahrzeugs 1, also unter Anderem auch die Information, dass auf dem Gehweg bzw. der Parkbucht 10 eingeparkt werden darf. Diese Umgebungsinformation kann die Steuereinrichtung 3 anhand der Kartendaten und der aktuellen globalen Position des Kraftfahrzeugs 1 und/oder anhand eines in einem aufgenommenen Bild erkannten Verkehrszeichens gewinnen. Die Steuereinrichtung 3 kann in den aufgenommenen Bildern nämlich Verkehrszeichen identifizieren, wie sie beispielsweise in den Fig. 6 bis 8 dargestellt sind. Gemäß Fig. 6 kann die Steuereinrichtung 3 erkennen, dass das Kraftfahrzeug 1 teilweise auf dem Gehweg eingeparkt werden kann, und zwar in Längsrichtung der Straße 11. Wie in Fig. 7 dargestellt ist, kann die Steuereinrichtung 3 auch anhand der Bilder erkennen, dass das Kraftfahrzeug 1 vollständig auf dem Gehweg geparkt werden kann. Dabei erkennt die Steuereinrichtung 3 anhand eines auf dem Verkehrszeichen dargestellten Pfeils die Richtung, in welche das Parken auf dem Gehweg - von dem Verkehrszeichen aus gesehen - erlaubt ist, also links und/oder rechts von dem Verkehrszeichen. Schließlich kann die Steuereinrichtung 3 gemäß Fig. 8 auch erkennen, dass das Kraftfahrzeug 1 teilweise auf dem Gehweg eingeparkt werden kann, und zwar senkrecht zur Straße 11. Hier erkennt die Steuereinrichtung 3 auch den auf dem Verkehrszeichen dargestellten Doppelpfeil, dass das Einparken auf dem Gehweg auf den beiden Seiten des Verkehrszeichens möglich ist.

Entsprechende Informationen kann die Steuereinrichtung 3 auch aus den Kartendaten gewinnen.

Wird nun durch die Steuereinrichtung 3 die Information erfasst, dass das Parken auf dem Gehweg 10 möglich ist, so berücksichtigt die Steuereinrichtung 3 bei der Bestimmung der Tiefe der Parklücke 15 sowie bei der Bestimmung der Position der Parklücke 15 relativ zum Kraftfahrzeug 1 ausschließlich das Echo E4 des zweiten Bordsteins 14, wobei der erste Bordstein 13 nicht berücksichtigt wird. Dies kann insbesondere so aussehen, dass das Echo E3 des ersten Bordsteins 13 herausgefiltert wird oder aber die Messung mithilfe der Sensoreinrichtung 4 derart beeinflusst wird, dass durch die Sensoreinrichtung 4 ausschließlich der zweite Bordstein 14 vermessen wird.

Als die äußere Begrenzung der Parklücke 15 betrachtet die Steuereinrichtung 3 also den zweiten Bordstein 14, und nicht etwa den ersten Bordstein 13. Dies führt dazu, dass die Steuereinrichtung 3 die Parklücke 15 erkennt, die sich auf dem Gehweg bzw. der Parkbucht 10 befindet. Dies bedeutet, dass die Steuereinrichtung 3 eine Parkbahn berechnen kann, entlang welcher das Kraftfahrzeug 1 in die Parklücke 15 eingeparkt werden kann und dabei den ersten Bordstein 13 überfahren kann.

Die Steuereinrichtung 3 kann anhand der aufgenommenen Bilder auch weitere Verkehrszeichen identifizieren, und zwar etwa Verkehrszeichen betreffend das Parkverbot, wie in den Fig. 3 bis 5 dargestellt. Werden die Verkehrszeichen gemäß den Fig. 3 bzw. 4 erkannt; so kann die Steuereinrichtung 3 ein Införmationssignal ausgeben, durch welches der Fahrer über das Parkverbot informiert wird. Hier kann der Fahrer selbst entscheiden, ob der Parkvorgang durchgeführt werden soll oder nicht. Diese Entscheidung kann beispielsweise mithilfe einer Eingabeeinrichtung des Parkhilfesystems 2 getroffen werden. Das Informationssignal betreffend das Parkverbot kann auch dann ausgegeben werden, wenn durch die Steuereinrichtung 3 das Verkehrszeichen einer Bushaltestelle - wie in Fig. 5 dargestellt - erkannt wird und der Abstand zwischen dem Kraftfahrzeug 1 und dem Verkehrszeichen der Bushaltestelle kleiner als ein vorgegebener Grenzwert ist, nämlich insbesondere kleiner als 15 m.

Durch die Steuereinrichtung 3 kann auch ein Verkehrszeichen identifiziert werden, wie es in Fig. 9 dargestellt ist. Dieses Verkehrszeichen bedeutet, dass eine Parkscheibe erforderlich ist. Erkennt die Steuereinrichtung 3 diese Umgebungsinformation - sei es anhand der Kamerabilder, sei es anhand der Kartendaten - so wird ein entsprechendes Informationssignal ausgegeben, und der Fahrer wird über die Notwendigkeit der Parkscheibe informiert.

## Patentansprüche

1. Verfahren zum Erkennen einer Parklücke (15) für ein Kraftfahrzeug (1) mithilfe eines Parkhilfesystems (2) des Kraftfahrzeugs (1), mit den Schritten:
- Ermitteln eines geometrischen Parameters der Parklücke (15) anhand von Sensordaten einer Sensoreinrichtung (4) des Parkhilfesystems (2),
- Erfassen von weiteren, von den Sensordaten unterschiedlichen Umgebungsinformationen des Kraftfahrzeugs (1) mittels des Parkhilfesystems (2), wobei als weitere Umgebungsinformationen die Zulässigkeit des teilweisen oder vollständigen Parkens auf einem Gehweg (10) erfasst wird, und
- Erkennen der Parklücke (15) anhand des geometrischen Parameters der Parklücke (15) und hierbei Berücksichtigen der weiteren Umgebungsinformationen,
**dadurch gekennzeichnet, dass**
dass Berücksichtigen der weiteren Umgebungsinformationen umfasst, dass der geometrische Parameter der Parklücke (15) auch in Abhängigkeit von den weiteren Umgebungsinformationen des Kraftfahrzeugs (1) bestimmt wird, und dass, falls anhand der weiteren Umgebungsinformationen erkannt wird, das Kraftfahrzeug (1) zumindest teilweise auf dem Gehweg (10) geparkt werden darf, ein in Richtung seitlich vom Kraftfahrzeug (1) weg befindlicher erster Bordstein (13) durch das Parkhilfesystem (2) bei der Bestimmung des geometrischen Parameters der Parklücke (15)ignoriert wird.

2. Verfahren nach Anspruch 1,
**dadurch gekennzeichnet, dass**
als geometrischer Parameter eine Tiefe der Parklücke (15) in Querrichtung einer Fahrbahn (11), auf welcher sich das Kraftfahrzeug (1) beim Erfassen der Sensordaten bewegt, und/oder eine relative Position der Parklücke (15) bezüglich des Kraftfahrzeugs (1) bestimmt wird.

3. Verfahren nach Anspruch 1 oder 2,
**dadurch gekennzeichnet, dass**
die weiteren Umgebungsinformationen erfasst werden:
- anhand eines mittels einer Kamera (9) des Parkhilfesystems (2) aufgenommenen Bildes der Fahrzeugumgebung und/oder
- anhand von Kartendaten eines Navigationssystems (7, 8) des Kraftfahrzeugs (1) und anhand der aktuellen geografischen Position des Kraftfahrzeugs (1).

4. Verfahren nach Anspruch 3,
**dadurch gekennzeichnet, dass**
in dem aufgenommenen Bild ein Verkehrszeichen identifiziert wird und die weiteren Umgebungsinformationen aus dem Abbild des Verkehrszeichens gewonnen werden.

5. Verfahren nach einem der vorhergehenden Ansprüche,
**dadurch gekennzeichnet, dass**
in Abhängigkeit von der Information über die Zulässigkeit des Parkens auf dem Gehweg (10) eine Annahme bezüglich der Position eines die Parklücke (15) begrenzenden Bordsteins (13, 14) getroffen wird.

6. Verfahren nacheinem der vorhergehenden Ansprüche,
**dadurch gekennzeichnet, dass**
falls anhand der weiteren Umgebungsinformationen erkannt wird, dass das Kraftfahrzeug (1) zumindest teilweise auf dem Gehweg (10) geparkt werden darf, ein in Richtung seitlich vom Kraftfahrzeug (1) weg befindlicher erster Bordstein (13) durch das Parkhilfesystem (2) bei der Bestimmung der Tiefe der Parklücke (15) ignoriert wird.

7. Verfahren nacheinem der vorhergehenden Ansprüche,
**dadurch gekennzeichnet, dass**
falls anhand der weiteren Umgebungsinformationen erkannt wird, dass das Kraftfahrzeug (1) zumindest teilweise auf dem Gehweg (10) geparkt werden darf, ein in Richtung seitlich vom Kraftfahrzeug (1) weg befindlicher zweiter Bordstein (14) erfasst wird und bei der Bestimmung des geometrischen Parameters, insbesondere der Tiefe der Parklücke (15), berücksichtigt wird.

8. Verfahren nach einem der vorhergehenden Ansprüche,
**dadurch gekennzeichnet, dass**
anhand der weiteren Umgebungsinformationen festgestellt wird, ob das Parken in einer anhand der Sensordaten erkannten potentiellen Parklücke (15) zulässig ist oder nicht, und nach Feststellen eines Parkverbots ein Informationssignal durch das Parkhilfesystem (2) ausgegeben wird, durch welches der Fahrer des Kraftfahrzeugs (1) über das Parkverbot informiert wird.

9. Verfahren nach Anspruch 8,
**dadurch gekennzeichnet, dass**
nach Ausgabe des Informationssignals eine Eingabe durch das Parkhilfesystem (2) empfangen wird, weiche der Fahrer an einer Eingabeeinrichtung des Parkhilfesystems (2) vornimmt und über welche festgelegt wird, ob das Parkhilfesystem (2) einen Parkvorgang durchzuführen hat oder nicht.

10. Verfahren nach Anspruch 8 oder 9,
**dadurch gekennzeichnet, dass**
nach Feststellen des Parkverbots eine Parkalternative für das Einparken anhand von Kartendaten eines Navigationssystems (7, 8) und anhand der aktuellen geografischen Position des Kraftfahrzeugs (1) durch das Parkhilfesystem (2) vorgeschlagen wird.

11. Parkhilfesystem (2), welches zum Durchführen eines Verfahrens nach einem der vorhergehenden Ansprüche ausgebildet ist.

12. Kraftfahrzeug (1) mit einem Parkhilfesystem (2) nach Anspruch 11.

## Claims

1. Method for detecting a parking space (15) for a motor vehicle (1) using a parking assistance system (2) of the motor vehicle (1), comprising the steps:
- determining a geometric parameter of the parking space (15) on the basis of sensor data of a sensor device (4) of the parking assistance system (2),
- acquiring further ambient information, which is different from the sensor data, of the motor vehicle (1), by means of the parking assistance system (2), wherein the admissibility of the partial or complete parking on a pedestrian path (10) is acquired as further ambient information, and
- detecting the parking space (15) on the basis of the geometric parameter of the parking space (15), and taking into account the further ambient information in the process,
**characterized in that**
taking into account the further ambient information comprises the fact that the geometric parameter of the parking space (15) is also determined as a function of the further ambient information of the motor vehicle (1), and **in that** if it is detected on the basis of the further ambient information that the motor vehicle (1) may be at least partially parked on the pedestrian path (10), a first kurb (13) which is located in the direction leading laterally away from the motor vehicle (1) is ignored by the parking assistance system (2) during the determination of the geometric parameter of the parking space (15).

2. Method according to Claim 1,
**characterized in that**
a depth of the parking space (15) in the lateral direction of a carriageway (11) on which the motor vehicle (1) is moving when the sensor data is acquired and/or a relative position of the parking space (15) with respect to the motor vehicle (1) are determined as geometric parameters.

3. Method according to Claim 1 or 2,
**characterized in that**
the further ambient information is acquired:
- on the basis of an image of the vehicle surroundings captured by means of a camera (9) of the parking assistance system (2), and/or
- on the basis of map data of a navigation system (7, 8) of the motor vehicle (1) and on the basis of the current geographic position of the motor vehicle (1).

4. Method according to Claim 3,
**characterized in that**
a road sign is identified in the captured image and the further ambient information is acquired from the image of the road sign.

5. Method according to one of the preceding claims,
**characterized in that**
an assumption regarding the position of a kurb (13, 14) bounding the parking space (15) is made as a function of the information about the admissibility of parking on the pedestrian path (10) .

6. Method according to one of the preceding claims,
**characterized in that**
if it is detected on the basis of the further ambient information that the motor vehicle (1) may be at least partially parked on the pedestrian path (10), a first kurb (13) which is located in the direction leading laterally away from the motor vehicle (1) is ignored by the parking assistance system (2) during the determination of the depth of the parking space (15).

7. Method according to one of the preceding claims,
**characterized in that**
if it is detected on the basis of the further ambient information that the motor vehicle (1) may be at least partially parked on the pedestrian path (10), a second kurb (14) which is located in the direction leading laterally away from the motor vehicle (1) is sensed and is taken into account during the determination of the geometric parameter, in particular the depth of the parking space (15).

8. Method according to one of the preceding claims,
**characterized in that**
on the basis of the further ambient information it is detected whether or not parking is permissible in a potential parking space (15) detected on the basis of the sensor data, and after a parking prohibition has been detected an information signal is output by the parking assistance system (2), which information signal informs the driver of the motor vehicle (1) about the parking prohibition.

9. Method according to Claim 8,
**characterized in that**
after the outputting of the information signal, an input is received by the parking assistance system (2), which input is made by the driver on an input device of the parking assistance system (2) and by means of which it is defined whether or not the parking assistance system (2) has to carry out a parking process.

10. Method according to Claim 8 or 9,
**characterized in that**
after the parking prohibition has been detected, a parking alternative for parking is proposed on the basis of map data of a navigation system (7, 8) and on the basis of the current geographic position of the motor vehicle (1) by the parking assistance system (2).

11. Parking assistance system (2) which is designed to carry out a method according to one of the preceding claims.

12. Motor vehicle (1) having a parking assistance system (2) according to Claim 11.

## Revendications

1. Procédé de reconnaissance d'un emplacement de stationnement (15) pour un véhicule automobile (1) à l'aide d'un système d'assistance au stationnement (2) du véhicule automobile (1), comprenant les étapes suivantes :
- détermination d'un paramètre géométrique de l'emplacement de stationnement (15) à l'aide de données de capteur d'un dispositif de détection (4) du système d'assistance au stationnement (2),
- collecte d'informations sur l'environnement supplémentaires du véhicule automobile (1), différentes des données de capteur, au moyen du système d'assistance au stationnement (2), le caractère autorisé du stationnement partiel ou complet sur un trottoir (10) étant collecté en tant qu'informations environnementales supplémentaires, et
- reconnaissance de l'emplacement de stationnement (15) à l'aide du paramètre géométrique de l'emplacement de stationnement (15) et prise en compte à cette occasion des informations sur l'environnement supplémentaires,
**caractérisé en ce que**
la prise en compte des informations sur l'environnement supplémentaires inclut le fait que le paramètre géométrique de l'emplacement de stationnement (15) est également déterminé en fonction des informations sur l'environnement supplémentaires du véhicule automobile (1), et **en ce que** si les informations sur l'environnement supplémentaires permettent de reconnaître que le véhicule automobile (1) est autorisé à stationner au moins partiellement sur le trottoir (10), une première pierre de bordure (13) qui se trouve dans une direction latérale s'écartant du véhicule automobile (1) est ignorée par le système d'assistance au stationnement (2) lors de la détermination du paramètre géométrique de l'emplacement de stationnement (15).

2. Procédé selon la revendication 1, **caractérisé en ce que** le paramètre géométrique déterminé est une profondeur de l'emplacement de stationnement (15) dans le sens transversal d'une voie de circulation (11) sur laquelle se déplace le véhicule automobile (1) lors de la collecte des données de capteur et/ou une position relative de l'emplacement de stationnement (15) par rapport au véhicule automobile (1).

3. Procédé selon la revendication 1 ou 2, **caractérisé en ce que** les informations sur l'environnement supplémentaires sont collectées :
- à l'aide d'une image de l'environnement du véhicule enregistrée au moyen d'un appareil photo (9) du système d'assistance au stationnement (2) et/ou
- à l'aide de données cartographiques d'un système de navigation (7, 8) du véhicule automobile (1) et à l'aide de la position géographique actuelle du véhicule automobile (1).

4. Procédé selon la revendication 3, **caractérisé en ce qu'**un panneau de signalisation est identifié dans l'image enregistrée et les informations sur l'environnement supplémentaires sont obtenues à partir de la représentation du panneau de circulation.

5. Procédé selon l'une des revendications précédentes, **caractérisé en ce qu'**une hypothèse concernant la position d'une pierre de bordure (13, 14) délimitant l'emplacement de stationnement (15) est émise en fonction de l'information relative au caractère autorisé du stationnement sur le trottoir (10) .

6. Procédé selon l'une des revendications précédentes, **caractérisé en ce que** si les informations sur l'environnement supplémentaires permettent de reconnaître que le véhicule automobile (1) est autorisé à stationner au moins partiellement sur le trottoir (10), une première pierre de bordure (13) qui se trouve dans une direction latérale s'écartant du véhicule automobile (1) est ignorée par le système d'assistance au stationnement (2) lors de la détermination de la profondeur de l'emplacement de stationnement (15).

7. Procédé selon l'une des revendications précédentes, **caractérisé en ce que** si les informations sur l'environnement supplémentaires permettent de reconnaître que le véhicule automobile (1) est autorisé à stationner au moins partiellement sur le trottoir (10), une deuxième pierre de bordure (14) qui se trouve dans une direction latérale s'écartant du véhicule automobile (1) est prise en compte est collectée et lors de la détermination du paramètre géométrique, notamment de la profondeur de l'emplacement de stationnement (15).

8. Procédé selon l'une des revendications précédentes, **caractérisé en ce que** les informations sur l'environnement supplémentaires permettent de constater si le stationnement dans un emplacement de stationnement (15) potentiel reconnu à l'aide des données de capteur est autorisé ou non, et après avoir constaté une interdiction de stationnement, un signal d'information est délivré par le système d'assistance au stationnement (2), par le biais duquel le conducteur du véhicule automobile (1) est informé de l'interdiction de stationnement.

9. Procédé selon la revendication 8, **caractérisé en ce qu'**après la délivrance du signal d'information, une entrée est reçue par le système d'assistance au stationnement (2), laquelle est effectuée par le conducteur sur un dispositif de saisie du système d'assistance au stationnement (2) et par le biais de laquelle il est défini si le système d'assistance au stationnement (2) doit exécuter ou non une manoeuvre de stationnement.

10. Procédé selon la revendication 8 ou 9, **caractérisé en ce qu'**après avoir constaté l'interdiction de stationnement, une alternative de stationnement pour l'entrée en stationnement est proposée par le système d'assistance au stationnement (2) à l'aide de données cartographiques d'un système de navigation (7, 8) et à l'aide de la position géographique actuelle du véhicule automobile (1).

11. Système d'assistance au stationnement (2) qui est configuré pour mettre en oeuvre un procédé selon l'une des revendications précédentes.

12. Véhicule automobile (1) équipé d'un système d'assistance au stationnement (2) selon la revendication 11.
